Europäisches Patentamt

**European Patent Office**

**Office européen des brevets**

(11) Veröffentlichungsnummer: **0 123 132**

**B1**

(12) **EUROPÄISCHE PATENTSCHRIFT**

(45) Veröffentlichungstag der Patentschrift:
03.02.88

(21) Anmeldenummer: **84103055.4**

(22) Anmeldetag: **20.03.84**

(51) Int. Cl.⁴: **H 04 B 17/02,** H 04 L 25/00, H 04 L 1/24

(54) **Überwachungssystem für ein digitales Übertragungssystem.**

(30) Priorität: **24.03.83 DE 3310795**

(43) Veröffentlichungstag der Anmeldung:
**31.10.84 Patentblatt 84/44**

(45) Bekanntmachung des Hinweises auf die Patenterteilung:
**03.02.88 Patentblatt 88/5**

(84) Benannte Vertragsstaaten:
**AT BE CH DE FR GB IT LI NL**

(56) Entgegenhaltungen:
EP-A-0 018 295
DE-A-3 027 755
DE-A-3 207 397
US-A-4 301 538
US-A-4 354 054

(73) Patentinhaber: **Siemens Aktiengesellschaft Berlin und München, Wittelsbacherplatz 2, D-8000 München 2 (DE)**

(84) Benannte Vertragsstaaten:
**BE CH DE FR GB IT LI NL AT**

(73) Patentinhaber: **Philips Kommunikations Industrie AG, Thurn- und- Taxis- Strasse 10, D-8500 Nürnberg 10 (DE)**

(84) Benannte Vertragsstaaten: **DE**

(72) Erfinder: **Vollnhals, Friedemann, Dipl.- Ing., Mühlpointweg 10, D-8190 Wolfratshausen (DE)**
Erfinder: **Hecht, Georg, Dipl.- Ing., Pausalastrasse 14, D-8500 Nürnberg (DE)**
Erfinder: **Hecht, Wilfried, Dipl.- Ing., Stemmenreuther Weg 5, D-8570 Pegnitz- Troschenreuth (DE)**

(74) Vertreter: **Mehl, Ernst, Dipl.- Ing., Postfach 22 01 76, D-8000 München 22 (DE)**

LIBER, STOCKHOLM 1988

## Beschreibung

Die Erfindung betrifft ein Überwachungssystem für ein digitales Übertragungssystem, das Leitungsendgeräte und Zwischenregeneratoren enthält, mit den weiteren im Oberbegriff des Anspruches 1 genannten Merkmalen.

Aus der DE-A-30 27 755 ist ein Verfahren zur Überwachung von Zwischenregeneratoren bekannt. Es handelt sich hierbei um ein Verfahren, das die Ortung von Fehlern während des Betriebes ohne Adressierung der Zwischenregeneratoren ermöglicht.

Im störungsfreien Betrieb sendet der erste Zwischenregenerator nach dem Leitungsendgerät periodisch ein Telemetrie-Telegramm aus. Der nächste Zwischenregenerator, also der zweite nach dem Leitungsendgerät in Übertragungsrichtung gesehen, empfängt das Telemetrie-Telegramm des ersten und sendet unmittelbar daran anschließend sein eigenes Telemetrie-Telegramm aus. Jeder weitere Zwischenregenerator fügt in der gleichen Weise sein eigenes Telemetrie-Telegramm an die empfangenen Telemetrie-Telegramme an, so daß eine regelrechte Telegrammkette entsteht. Weil die Anzahl der einzelnen Telegramme in einer Kette genau der Anzahl der Zwischenregeneratoren entspricht, lassen sich die einzelnen Telegramme durch Auszählen den einzelnen Zwischenregeneratoren zuordnen.

Ein Telemetrie-Telegramm enthält Informationen über die Fehlerrate des Nutzsignales und über den Zustand desjenigen Zwischenregenerators, der es ausgesendet hat. Es besteht aus zwei Startblöcken, zwei Fehlerblöcken, zwei Prüfblöcken und einem oder zwei Endblöcken. Der zweite Fehler- und der zweite Prüfblock sind jeweils zum ersten Fehler- bzw. ersten Prüfblock invertiert.

Beim Anfügen eines Telemetrie-Telegrammes an das Ende einer empfangenen Telegrammkette wird der zweite Endblock am Ende der Kette vom ersten Startblock des anzufügenden Telemetrie-Telegrammes überschrieben, so daß jeweils nur das letzte Telemetrie-Telegramm in einer Telegrammkette einen zweiten Endblock hat, während der zweite Endblock bei allen anderen Telemetrie-Telegrammen jeweils vom ersten Startblock des nächstfolgenden Telemetrie-Telegrammes überschrieben ist.

Jeder Zwischenregenerator ist mit einem Telemetrie-Telegramm-Regenerator ausgestattet, der das Telemetrie-Telegramm erzeugt und ebenso wie der Nutzsignalregenerator überwacht wird. Ein Telemetrie-Telegramm-Regenerator enthält neben weiteren Funktionseinheiten einen Signalgenerator und eine Einsetzschaltung. Die vom Signalgenerator erzeugten Endblöcke werden an die Einsetzschaltung zur Aussendung weitergeleitet.

Es soll nun erläutert werden, welche Verfahrensschritte ablaufen, wenn z. B. der Abschnitt zwischen zwei Zwischenregeneratoren unterbrochen ist oder ein Zwischenregenerator überhaupt nicht mehr sendet.

Empfängt ein Zwischenregenerator, außer dem ersten nach dem Leitungsendgerät in Übertragungsrichtung gesehen, innerhalb eines Zeitintervalls, das größer ist als die Periodendauer, in welcher der erste Zwischenregenerator sein Telemetrie-Telegramm aussendet, kein Telemetrie-Telegramm, so sendet er selbsttätig sein eigenes Telemetrie-Telegramm aus. Deshalb beginnen zunächst alle Zwischenregeneratoren, die hinter der Störstelle liegen, ihr eigenes Telemetrie-Telegramm auszusenden, jedoch wird ihre Aussendung bei den Zwischenregeneratoren, die sich an den ersten hinter der Störstelle liegenden Zwischenregenerator anschließen, wieder durch den Empfang des Telemetrie-Telegrammes unterbrochen, das der erste Zwischenregenerator hinter der Störstelle aussendet. Bei störungsfreiem Betrieb im weiteren Verlauf der Übertragungsstrecke fügen die restlichen Zwischenregeneratoren hinter der Störstelle ihr eigenes Telemetrie-Telegramm an das bzw. die empfangenen Telegramme an.

Wird ein zweiter Endblock von der Einsetzschaltung ausgesendet, ohne vom Signalgenerator generiert zu sein, so liegt eine Fehlfunktion des Telemetrie-Telegramm-Regenerators vor. Bei einer derartigen Fehlfunktion wird das eigene Telemetrie-Telegramm ohne zweiten Endblock ausgesendet.

Empfängt ein Zwischenregenerator ein einzelnes Telemetrie-Telegramm ohne zweiten Endblock oder eine Telegrammkette, deren letztes Telemetrie-Telegramm keinen zweiten Endblock aufweist, so wird in diesem Zwischenregenerator die Aussendung des eigenen Telemetrie-Telegrammes unterdrückt. Wenn z. B. im ersten Zwischenregenerator nach dem Endgerät der Telemetrie-Telegramm-Regenerator nicht fehlerfrei arbeitet, sendet dieser Zwischenregenerator sein Telemetrie-Telegramm ohne zweiten Endblock aus. Weil bei allen restlichen Zwischenregeneratoren dadurch die Aussendung ihres eigenen Telemetrie-Telegrammes unterdrückt wird, unterbleibt in diesem Fall auch ihre Überwachung.

Aufgabe der Erfindung ist es deshalb, ein Überwachungssystem für ein digitales Übertragungssystem anzugeben, das eine laufende und vollständige Überwachung der Übertragungsstrecke ermöglicht.

Diese Aufgabe wird durch die kennzeichnenden Merkmale des Anspruchs 1 gelöst.

Vorteilhafte Ausgestaltungen der Erfindung sind in den Unteransprüchen angegeben.

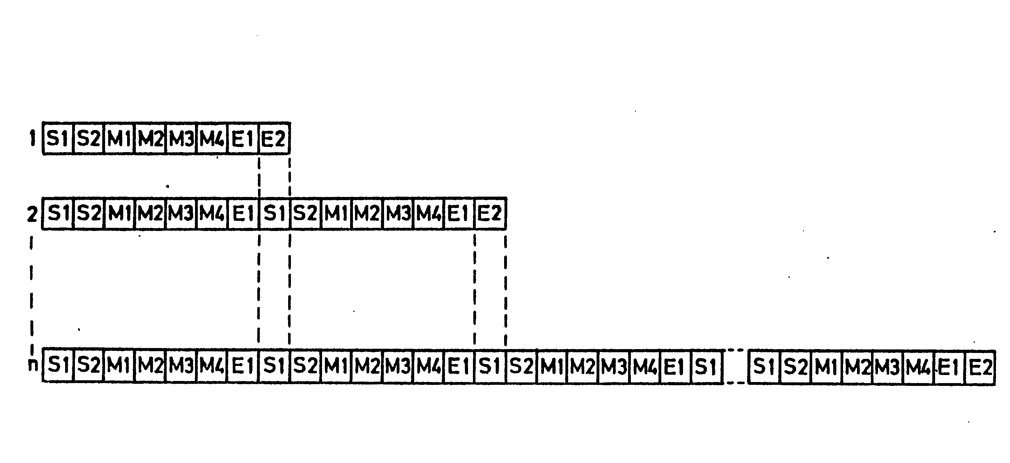

Die Figur zeigt den Aufbau einer Telemetrie-Telegramm-Kette aus n Telegrammen.

Ein Ausführungsbeispiel der Erfindung wird im folgenden näher erläutert.

Im störungsfreien Betrieb senden die Telemetrie-Telegramm-Regeneratoren des Leitungsendgerätes und der Zwischenregeneratoren Telemetrie-Telegramme aus. Ein Leitungsendgerät sendet sein Telemetrie-Telegramm, das Informationen über seinen Zustand enthält, periodisch im Abstand der Zykluszeit aus, während ein Zwischenregenerator sein Telemetrie-Telegramm an das oder die empfangenen Telemetrie-Telegramme anfügt. Nur wenn ein Zwischenregenerator während einer Zeit, die größer als die Zykluszeit ist, kein Telemetrie-Telegramm empfängt, sendet er selbsttätig sein Telemetrie-Telegramm aus.

Der Inhalt der letzten beiden Meldeblöcke eines Telemetrie-Telegrammes, das aus zwei Startblöcken S1, S2, vier Meldeblöcken M1, M2, M3, M4 sowie einem oder zwei Endblöcken E1, E2 aufgebaut ist, zeigt an, ob das Telemetrie-Telegramm selbsttätig ausgesendet wurde, weil über eine Zeit, die größer als die Zykluszeit ist, kein Telemetrie-Telegramm empfangen worden ist. In den Zwischenregeneratoren wird der Rahmen der empfangenen Telemertie-Telegramme überprüft, der von den Start- und Endblöcken gebildet wird. Wenn von diesen Blöcken mehr als ein Block verfälscht ist, wird das Telemetrie-Telegramm vom Telemetrie-Telegramm-Regenerator mit binären Nullen überschrieben.

Wenn im Nutzsignal ein Codefehler auftaucht, werden in den Zwischenregeneratoren die m folgenden Codezeichen zu einem sogenannten Fehlerblock zusammengefaßt. Weitere in diesem Fehlerblock eventuell auftretende Codefehler werden nicht mehr berücksichtigt, sondern es bewirkt der erste Fehler nach dem Ende des Fehlerblocks die Bildung eines neuen Fehlerblocks, der ebenfalls aus m aufeinanderfolgenden Codezeichen besteht. Die Anzahl der Fehlerblöcke, die während jeder Zykluszeit gebildet wurde, stellt den Inhalt der ersten beiden Meldeblöcke eines jeden Telemetrie-Telegrammes dar, das vom Telemetrie-Telegramm-Regenerator eines Zwischenregenerators erzeugt wird.

Die maximale Anzahl der Fehlerblöcke, die während einer Zykluszeit überhaupt auftreten können, läßt sich in mehrere Bereiche aufteilen. Der Bereich, in den eine aktuelle Anzahl der Fehlerblöcke fällt, stellt dann an Stelle der Anzahl der Fehlerblöcke den Inhalt der ersten beiden Meldeblöcke eines Telemetrie-Telegrammes dar.

Im allgemeinen genügt es, für die Codeworte der Start-, Melde- und Endblöcke je vier Bits vorzusehen. Die Anzahl der maximal vorkommenden Fehlerblöcke ist nur in soviele Bereiche aufgeteilt, daß zur Codierung aller Bereiche sowie auch der Start- und Endblöcke eines Telemetrie-Telegammes verschiedene Codeworte verwendet werden können. Somit ist sicher ausgeschlossen, daß in den Start-, den End- und den ersten beiden Meldeblöcken gleiche Codeworte stehen. Die ersten beiden Meldeblöcke M1 und M2 aller Telemetrie-Telegramme, die vom Telemetrie-Telegramm-Regenerator eines Leitungsendgerätes über die Strecke ausgesendet werden, sind zu Prüfzwecken immer aus den gleichen Codeworten gebildet.

Der Telegramm-Empfänger ist mit einer Eingabe-, einer Anzeigevorrichtung und mit einem Speicher ausgestattet, in dem die Anzahl der Telemetrie-Telegramme speicherbar ist, die im störungsfreien Betrieb der Übertragungsstrecke während eines Zyklus im sendenden Leitungsendgerät und in den Zwischenregeneratoren erzeugt und in einer Kette zum empfangenden Leitungsendgerät übertragen werden. Diese Anzahl dient als Sollzahl; sie wird mit der Anzahl der tatsächlich empfangenen Telemetrie-Telegramme verglichen. Stimmen beide Zahlen, Sollzahl und Anzahl der empfangenen Telemetrie-Telegramme überein, so läuft der Betrieb ohne Unterbrechung der Übertragungsstrecke ab. Fehlt dagegen eines oder fehlen mehrere Telemetrie-Telegramme, läßt dies auf defekte Zwischenregeneratoren oder gar eine Unterbrechung der Strecke schließen. Durch einfaches Abzählen der empfangenen Telemetrie-Telegramme kann leicht ermittelt werden, in welchem Teil der Übertragungsstrecke die Fehlerquelle liegt. Je nach der Anzahl der Zwischenregeneratoren ist die aktuelle Sollzahl jeweils vor der Inbetriebnahme des Überwachungssystemes vom Wartungspersonal in den Telegramm-Empfänger einzugeben. Auf der Anzeigevorrichtung können die Nummern der Zwischenregeneratoren und der Leitungsendgeräte mit dem Inhalt der zugehörigen Telemetrie-Telegramme angezeigt werden. Dabei werden die einzelnen Telemetrie-Telegramme einer Telegrammkette abgetastet und nacheinander für eine bestimmte Zeit angezeigt. Wird eine neue Telegrammkette empfangen, so wird die vorherige Telegrammkette überschrieben, so daß nur Telemetrie-Telegramme zur Anzeige gebracht werden, die nicht älter als die Zykluszeit sind.

Ferner ist am Telegramm-Empfänger ein zusätzlicher Anschluß vorgesehen, über den ihm Telegramme zugeführt werden, die im ortenden Leitungsendgerät erzeugt werden. Die Meldeblöcke dieser im ortenden Leitungsendgerät erzeugten Telegramme enthalten Informationen über die Fehlerrate des Nutzsignales, welches das ortende Leitungsendgerät empfängt. Welche Zwischenregeneratoren die Fehlerrate dieses im ortenden Leitungsendgerät empfangenen Nutzsignales verursachen, kann den Telemetrie-Telegrammen der Zwischenregeneratoren entnommen werden. So kann das Wartungspersonal mit einem Blick nicht nur feststellen, wie groß die Fehlerrate des Nutzsignales in jedem Leitungsendgerät und in jedem Zwischenregenerator ist, sondern gleichzeitig erkennt es auch, welche Funktionseinheiten in den Leitungsendgeräten und in den Zwischenregeneratoren nicht mehr fehlerfrei arbeiten. Neben einer genauen Ortung der Fehlerquelle wird auch eine weitgehende Fehleranalyse vom empfangenden Leitungsendgerät aus ermöglicht.

Bei einem weiteren Ausführungsbeispiel ist es auch möglich, nur einen Teilbereich der Zwischenregeneratoren zu überprüfen. Hierzu sind lediglich die Nummer des ersten und des letzten Zwischenregenerators des gewünschten Teilbereiches in den Telegramm-Empfänger einzugeben. Auf der Anzeigevorrichtung erscheinen dann die Inhalte der Telemetrie-Telegramme dieser Zwischenregeneratoren zusammen mit ihren Nummern, so daß auch hier Fehlerortung und vor allem Fehleranalyse möglich sind.

Zur schnelleren Eingrenzung mehrerer Fehler kann eine Schwelle für die Fehlerblockzahl vorgegeben werden. Es werden dann nur solche Telemetrie-Telegramme angezeigt, deren Fehlerblockzahl gleich oder größer als die vorgegebene Schwelle ist.

Für den Fall, daß z. B. ein einzelner Zwischenregenerator oder ein Leitungsendgerät über längere Zeit genauer überwacht werden soll, besteht bei einem weiteren Ausführungsbeispiel die Möglichkeit, auf der Anzeigevorrichtung des Telegramm-Empfängers den Inhalt des Telemetrie-Telegrammes und die Nummer dieses einzeln zu überprüfenden Zwischenregenerators bzw. Leitungsendgerätes anzuzeigen. Hierzu ist bloß die Nummer des gewünschten Zwischenregenerators oder Leitungsendgerätes in den Telegramm-Empfänger einzugeben. Von Zyklus zu Zyklus wird jeweils der Inhalt des neuesten Telemetrie-Telegrammes angezeigt, während der Inhalt des Telemetrie-Telegrammes vom vorhergehenden Zyklus durch Überschreiben gelöscht wird. Dadurch wird eine genauere Fehleranalyse über einen längeren Zeitraum bei einem Zwischenregenerator oder Leitungsendgerät ermöglicht. Es lassen sich beispielsweise langsame Veränderungen in der Funktion des Zwischenregenerators oder des Leitungsendgerätes, die vielleicht durch Änderungen der Temperatur oder Feuchte verursacht werden, leicht feststellen und auf einem anschließbaren Drucker registrieren.

Wie bereits erwähnt, werden bei jedem Zyklus im Nutzsignal auftretende Codefehler zu Fehlerblöcken zusammengefaßt. Es gibt eine maximale Anzahl von Fehlerblöcken, die für jeden Zyklus gleich groß ist. Bei einem weiteren Ausführungsbeispiel der Erfindung ist nun eine Vorrichtung zur Eigenüberwachung des Telegramm-Empfängers vorgesehen, bei der die maximale Anzahl von Fehlerblöcken, die während eines Zyklus auftreten kann, ausgenutzt wird.

Im Telegramm-Empfänger sind sogenannte Prüftelegramme abgespeichert, die alle vorkommenden Anzahlen von Fehlerblöcken, also von Null bis zur maximalen Anzahl, enthalten. Zur Eigenüberwachung des Telegramm-Empfängers werden diese Prüftelegramme durch einen Programmbefehl ausgelesen und wie empfangene Telemetrie-Telegramme ausgewertet. Weil für jedes Prüftelegramm die Anzahl der Fehlerblöcke bekannt ist, zeigt das Ergebnis der Auswertung, ob der Telegramm-Empfänger fehlerfrei arbeitet.

Eine weitere Eigenprüfung ist für den laufenden Betrieb vorgesehen. Vom sendenden Leitungsendgerät wird nicht die Anzahl der Fehlerblöcke des gesendeten Nutzsignales sondern eine festgelegte Anzahl von Fehlerblöcken als Prüfzahl im Telemetrie-Telegramm des Leitungsendgerätes über die gesamte Übertragungsstrecke zum Telegramm-Empfänger übertragen. Im Telegramm-Empfänger wird bei jeder Telegramm-Kette die abgespeicherte Sollzahl mit der empfangenen Istzahl der Fehlerblöcke verglichen. Stimmen die beiden Zahlen nicht überein, so wird dies im Telegramm-Empfänger festgestellt und zur Anzeige gebracht.

Es ist außerdem bereits erwähnt worden, daß die Anzahl der Fehlerblöcke, die innerhalb eines Zyklus auftreten können, in mehrere Bereiche aufgeteilt ist. Anstelle der Anzahl der Fehlerblöcke stellt dann der Bereich, in den eine aktuelle Anzahl von Fehlerblöcken fällt, den Inhalt der ersten beiden Meldeblöcke eines Telemetrie-Telegrammes dar. In diesem Fall gibt es deshalb eine maximale Anzahl von Fehlerbereichen. Darum können anstelle der Anzahl der Fehlerblöcke die Prüftelegramme die Anzahl aller möglichen Bereiche enthalten.

Bei einem weiteren Ausführungsbeispiel ist vorgesehen, daß sowohl bei der Erstinbetriebnahme des erfindungsgemäßen Überwachungssystems an einem Übertragungssystem als auch bei einem Wechsel der Betriebsart, der Telegramm-Empfänger durch Symbole auf der Anzeigevorrichtung solange nach weiteren Angaben fragt, bis die Bedienperson die für die jeweilige Betriebsart erforderlichen Angaben vollständig eingegeben hat.

Ferner ist bei einem weiteren Ausführungsbeispiel vorgesehen, daß nach jeder Eingabe alle im Speicher abgelegten Befehle und Eingaben ausgelesen und zur Kontrolle auf Eingabefehler oder Verfälschungen in der Reihenfolge ihrer Eingabe auf der Anzeigevorrichtung angezeigt werden.

Bei einem weiteren Ausführungsbeispiel werden die eingegebenen Anweisungen auf Zulässigkeit geprüft. Wenn z. B. unzulässige Nummern von Zwischenregeneratoren oder unzulässige Anzahlen von Fehlerblöcken eingegeben worden sind, so stellt der Telegramm-Empfänger durch Vergleich mit den zulässigen Zahlen den Eingabefehler fest und zeigt ihn durch ein Fehlersymbol in der Anzeigevorrichtung an.

Bei einem weiteren Ausführungsbeispiel können alle eingegebenen Anweisungen auf der Anzeigevorrichtung angezeigt werden, so daß das Bedienungspersonal jederzeit überprüfen kann, welche Befehle im Speicher abgelegt sind.

Ferner ist es bei einem weiteren · Ausführungsbeispiel vorgesehen, daß durch einen gesonderten Befehl auf der Anzeigevorrichtung nicht der Meldeinhalt der einzelnen Telemetrie-Telegramme aus der Telegrammkette, sondern nur die Summe der in jeder Telegrammkette enthaltenen Telegramme und die eingegebene Sollzahl der Telegramme angezeigt werden.

Bei einer Unterbrechung der Eingabe, die länger als eine vorgegebene Zeit dauert, oder bei einer falschen nicht innerhalb der vorgegebenen Zeit korrigierten Eingabe wartet bei einem weiteren Ausführungsbeispiel der Telegramm-Empfänger nicht auf die Korrektur oder die Fortsetzung der begonnen Eingabe, sondern fährt mit der automatischen Überwachung der Übertragungsstrecke fort.

Schließlich ist ein weiteres Ausführungsbeispiel der Erfindung mit einer Alarmvorrichtung ausgestattet, die bereits einen Alarm abgibt, wenn eine der folgenden Bedingungen erfüllt ist:

a) Die Zahl der empfangenen Telemetrie-Telegramme mehrmals nacheinander nicht mit der im Telegramm-Empfänger gespeicherten Sollzahl übereinstimmt,

b) die Mikroprozessor-Steuerung des Telegramm-Empfängers ausfällt,

c) die Betriebsspannung im Telegramm-Empfänger ausfällt.

Zusammenfassend seien die Funktionen und Eigenschaften eines Ausführungsbeispieles aufgezählt, das sich aus den Merkmalen, die in den Ansprüchen 1, 7, 9, 10 und 11 angeführt sind, ergibt.

Mit diesem Überwachungssystem
- können die Zwischenregeneratoren und beide Leitungsendgeräte - das entfernte und das ortende - der gesamten Übertragungsstrecke überwacht werden,
- können nach Belieben einzelne Teilbereiche von Zwischenregeneratoren überwacht werden,
- können nach Belieben einzelne Teilbereiche von Zwischenregeneratoren und ein Leitungsendgerät überwacht werden,
- können nach Belieben nur Zwischenregeneratoren und Leitungsendgeräte, bei denen die Anzahl der Fehlerblöcke eine Schwelle überschreitet, überwacht werden,
- kann nach Belieben ein einzelner Zwischenregenerator oder ein Leitungsendgerät überwacht werden.

Bei diesem Ausführungsbeispiel, kombiniert mit dem zuletzt genannten,
- wird der Telegramm-Empfänger selbst laufend überwacht,
- wird Alarm ausgelöst bei bestimmten Fehlfunktionen des Telegramm-Empfängers.

## Patentansprüche

1. Überwachungssystem für ein digitales Übertragungssystem mit Zwischenregeneratoren und Leitungsendgeräten, bei dem
a) Telemetrie-Telegramme über den gleichen Signalweg wie das digitale Nutzsignal jedoch in einer anderen Frequenzlage übertragen werden,
b) zur getrennten Überwachung des digitalen Nutzsignales beider Übertragungsrichtungen in jedem Zwischenregenerator zwei Telemetrie-Telegramm-Regeneratoren vorgesehen sind,
c) jeder Telemetrie-Telegramm-Regenerator ein eigenes Telemetrie-Telegramm an ein oder mehrere empfangene und wieder ausgesendete Telemetrie-Telegramme anfügtoder selbsttätig ein Telemetrie-Telegramm aussendet, wenn nach Ablauf einer Zeit, die größer als eine Zykluszeit ist, kein Telemetrie-Telegramm empfangen wurde,
d) die Telemetrie-Telegramme aus zwei gleichen Startblöcken (S1, S2), vier Meldeblöcken (M1, M2, M3, M4), wobei die ersten beiden inhaltsgleichen Meldeblöcke (M1, M2) codierte Informationen über den Zustand des digitalen Nutzsignales und wobei die beiden letzten inhaltsgleichen Meldeblöcke (M3, M4) codierte Informationen über die Funktionen des Zwischenregenerators enthalten, sowie aus einem oder zwei Endblöcken (E1, E2) aufgebaut sind,
e) auf der Empfangsseite durch Auszählen der Telemetrie-Telegramme die Zwischenregeneratoren lokalisiert und durch Auswerten der Meldeblöcke (M1, M2, M3, M4) überwacht werden, <u>dadurch gekennzeichnet,</u>
f) daß die Leitungsendgeräte ebenfalls über jeweils einen Telemetrie-Telegramm-Regenerator verfügen, der periodisch im Abstand der Zykluszeit sein Telemetrie-Telegramm aussendet,
g) daß dem Inhalt der letzten beiden Meldeblöcke (M3, M4) eines jeden Telemetrie-Telegrammes entnehmbar ist, ob es selbsttätig ausgesendet oder ob seine Aussendung durch ein oder mehrere empfangene Telemetrie-Telegramme ausgelöst wurde,
h) daß in jedem Leitungsendgerät ein Telegramm-Empfänger mit einem Speicher, mit einer Eingabe und mit einer Anzeigevorrichtung vorgesehen ist.

2. Überwachungssystem nach Anspruch 1, <u>dadurch gekennzeichnet,</u> daß der Telemetrie-Telegramm-Regenerator bei Empfang eines Telemetrie-Telegrammes mit fehlerhaftem Rahmen, der von den beiden Startblöcken (S1, S2) und dem einen oder beiden Endblöcken (E1, E2) gebildet wird, sämtliche Blöcke des Telegramms mit binären Nullen überschreibt, wenn mehr als ein Block verfälscht ist.

3. Überwachungssystem nach Anspruch 1 oder 2, <u>dadurch gekennzeichnet,</u> daß in jedem Zwischenregenerator beim Auftreten eines Codefehlers im Nutzsignal die m folgenden Codezeichen des Nutzsignales zu einem sogenannten Fehlerblock zusammengefaßt werden, in dem weitere Fehler unberücksichtigt bleiben, und daß der nächste Fehler nach dem Ende eines Fehlerblocks die Bildung eines neuen Fehlerblocks veranlaßt.

4. Überwachungssystem nach Anspruch 3, dadurch gekennzeichnet, daß die Gesamtzahl der während der Zykluszeit gebildeten Fehlerblöcke den Meldeinhalt der ersten beiden Meldeblöcke (M1, M2) des Telemetrie-Telegrammes darstellt.

5. Überwachungssystem nach Anspruch 3, dadurch gekennzeichnet, daß die Anzahl der Fehlerblöcke, die während einer Zykluszeit auftreten können, in Bereiche aufgeteilt ist und daß der Bereich, in den eine aktuelle Fehlerblöckzahl fällt, den Meldeinhalt der ersten beiden Meldeblöcke (M1, M2) des Telemetrie-Telegrammes darstellt.

6. Überwachungssystem nach Anspruch 1, 2, 3, 4 oder 5, dadurch gekennzeichnet, daß dem Telegramm-Empfänger über einen zusätzlichen Anschluß Telegramme zugeführt werden, die im ortenden Leitungsendgerät erzeugt werdenund deren Meldeblöcke Informationen über die Fehlerrate des vom ortenden Leitungsendgerät empfangenen Nutzsignales enthalten.

7. Überwachungssystem nach Anspruch 1, 2, 3, 4, 5, oder 6, dadurch gekennzeichnet, daß die Nummern der Zwischenregeneratoren und der Leitungsendgeräte mit dem Inhalt der zugehörigen Telemetrie-Telegramme anzeigbar sind.

8. Überwachungssystem nach Anspruch 7, dadurch gekennzeichnet, daß nur Telemetrie-Telegramme angezeigt werden, die nicht älter als die Zykluszeit sind.

9. Überwachungssystem nach Anspruch 7 oder 8, dadurch gekennzeichnet, daß die Inhalte der Telemetrie-Telegramme eines Teiles der Zwischenregeneratoren anzeigbar sind durch Eingabe ihrer Nummern in den Telegramm-Empfänger.

10. Überwachungssystem nach Anspruch 3, 4 oder 5, dadurch gekennzeichnet, daß nur die Inhalte der Telemetrie-Telegramme desjenigen Teiles der Zwischenregeneratoren anzeigbar sind, bei dem eine vorgebbare Fehlerblockzahlschwelle überschritten wird.

11. Überwachungssystem nach Anspruch 1, 2, 3, 4, 5 oder 6, dadurch gekennzeichnet, daß ein einzelner Zwischenregenerator oder ein einzelnes Leitungsendgerät durch Eingabe seiner Nummer überwacht und der Inhaltseines Telemetrie-Telegrammes eines jeden Zyklus angezeigt wird.

12. Überwachungssystem nach Anspruch 3, 4 oder 5, dadurch gekennzeichnet, daß in einem Speicher des Telegramm-Empfängers Prüftelegramme abgespeichert sind, die alle vorkommenden Fehlerblockzahlen enthalten, und daß die Prüftelegramme wie empfangene Telemetrie-Telegramme im Telegramm-Empfänger ausgewertet werden.

13. Überwachungssystem nach einem der Ansprüche 1 bis 12, dadurch gekennzeichnet, daß die Melde-(M1, M2, M3, M4), die Start- (S1, S2) und die Endblöcke (E1, E2) aus Codeworten zu je vier Bits bestehen.

14. Überwachungssystem nach Anspruch 13, dadurch gekennzeichnet, daß die Anzahl der möglichen Fehlerblöcke nur in soviele Bereiche aufgeteilt ist, daß zur Codierung aller Bereiche sowie der Start- und Endblöcke eines Telemetrie-Telegrammes verschiedene Codeworte verwendet werden können.

15. Überwachungssystem nach einem der Ansprüche 1 bis 14, dadurch gekennzeichnet, daß die ersten beiden Meldeblöcke (M1, M2) für alle Telemetrie-Telegramme, die vom Telemetrie-Telegramm-Regenerator eines Leitungsendgerätes über die Strecke ausgesendet werden, zu Prüfzwecken immer aus gleichen Codeworten bestehen.

## Claims

1. A monitoring system for a digital transmission system with intermediace regeneratore and line terminal devices wherein

a) telemetry telegrams are transmitted via the same signal path as the digital useful signal, but in a different frequency position,

b) for the separate monitoring of the digital useful signal in both directions of transmission, two telemetry telegram regenerators are provided in each intermediate regenerator,

c) each telemetry telegram regenerator attaches an individual telemetry telegram to one or more than one received and re-transmitted telemetry telegram or automatically transmits a telemetry telegram if, on the expiration of a period of time which exceeds a cycle time, no telemetry telegram has been received,

d) the telemetry telegrams are constructed from two identical start blocks (S1, S2), four message blocks (M1, M2, M3, M4), where the first message blocks (M1, M2), which are identical in content, contain coded information relating to the status of the digital useful signal and where the two last message blocks (M3, M4), which are identical in content, contain coded information relating to the functions of the intermediate regenerator, from one or two end block(s) (E1, E2)

e) at the receiving end the intermediate regenerators are localised by counting the telemetry telegrams and are monitored by analysing the message blocks (M1, M2, M3, M4), characterised in

f) that the line terminal devices are likewise each provided with a telemetry telegram regenerator which periodically transmits its telemetry telegram at intervals corresponding to the cycle time,

g) that it can be gathered from the content of the last two message blocks (M3, M4) of each telemetry telegram as to whether said telegram has been automatically transmitted or whether its transmission has been triggered by one or more than one received telemetry telegram,

h) in each line terminal device a telegram receiver is provided with a store, an input device and a display device.

2. A monitoring system as claimed in claim 1, characterised in that when a telemetry telegram is received which has a faulty frame formed by the two start blocks (S1, S2) and the one or two end block(s) (E1, E2), the telemetry telegram regenerator overwrites all the blocks of the telegram with binary zeros if more than one block is adulterated.

3. A monitoring system as claimed in claim 1 or 2, characterised in that in each intermediate regenerator, when a code error occurs in the useful signal, the m following code characters of the useful signal are combined to form a so-called error block in which further errors are disregarded, and that the next error following the end of an error block initiates the formation of a new error block.

4. A monitoring system as claimed in claim 3, characterised in that the total number of error blocks formed during the cycle time represents the message content of the first two message blocks (M1, M2) of the telemetry telegram.

5. A monitoring system as claimed in claim 3, characterised in that the number of error blocks which can occur during a cycle time is divided into sections and that the section in which a current error block number falls represents the message content of the first two message blocks (M1, M2) of the telemetry telegram.

6. A monitoring system as claimed in claims 1, 2, 3, 4 or 5, characterised in that the telegram receiver is supplied via an additional terminal with telegrams which are produced in the locating line terminal device and whose message blocks contain information relating to the error rate of the useful signal received by the locating line terminal device.

7. A monitoring system as claimed in claims 1, 2, 3, 4, 5, or 6, characterised in that the numbers of the intermediate regenerators and of the line terminal devices can be displayed with the content of the associated telemetry telegrams.

8. A monitoring system as claimed in claim 7, characterised in that only those telemetry telegrams whose duration does not exceed the cycle time are displayed.

9. A monitoring system as claimed in claims 7 or 8, characterised in that the contents of the telemetry telegrams of a section of the intermediate regenerators can be displayed by inputting their numbers into the telegram receiver.

10. A monitoring system as claimed in claims 3, 4 or 5, characterised in that only the contents of the telemetry telegrams of that section of the intermediate regenerators in which a predeterminable error block number threshold is exceeded can be displayed.

11. A monitoring system as claimed in claims 1, 2, 3, 4, 5 or 8, characterised in that one individual intermediate regenerator or one individual line terminal device is monitored by inputting its number and the content of its telemetry telegram in each cycle is displayed.

12. A monitoring system as claimed in claims 3, 4 or 5, characterised in that a store of the telegram receiver stores test telegrams which contain all the occurring error block numbers and that the test telegrams are analysed in the same manner as received telemetry telegrams in the telegram receiver.

13. A monitoring system as claimed in one of the claims 1 to 12, characterised in that the message blocks (M1, M2, M3, M4), the start blocks (S1, S2) and the end blocks (E1, E2) comprises code words each comprising four bits.

14. A monitoring system as claimed in claim 13, characterised in that the number of possible error blocks is divided only into as many sections as permit different code words to be used for coding all the sections and the start and end blocks of a telemetry telegram.

15. A monitoring system as claimed in one of the claims 1 to 14, characterised in that the first two message blocks (M1, M2) for all the telemetry telegrams transmitted by the telemetry telegram regenerator of a line terminal device via the link always comprises the same code words for test purposes.

**Revendications**

1. Système de contrôle pour un système de transmission numérique comportant des régénérateurs intermédiaires et des appareils terminaux de lignes, et dans lequel
   a) des télégrammes de télémétrie sont tramsmis par l'intermédiaire de la même voie de transmission de signaux que le signal utile numérique, mais dans une autre position de fréquence,
   b) pour réaliser le contrôle séparé du signal utile numérique dans les deux sens de transmission il est prévu, dans chaque régénérateur intermédiaire, deux régénérateurs de télégrammes de télémétrie,
   c) chaque régénérateur de télégrammes de télémétrie adjoint son propre télégramme de télémétrie à un ou plusieurs télégramme de télémétrie reçus et à nouveau émis ou émet de façon automatique un télégramme de télémétrie, lorsqu'après l'écoulement d'un intervalle de temps qui est supérieur à la durée d'un cycle, aucun télégramme de télémétrie n'a été reçu,
   d) les télégrammes de télémétrie sont constitués par deux blocs identiques de départ (S1, S2), par quatre blocs de signalisation (M1, M2, M3, M4), parmi lesquels les deux premiers blocs de signalisation (M1, M2) dont le contenu est identique contiennent des informations codées concernant l'état du signal utile numérique et les deux derniers blocs de signalisation (M3, M4), dont les contenus sont identiques, contiennent des informations codées concernant les fonctions du régénérateur intermédiaire, ainsi que par un ou deux blocs terminaux (E1, E2),

e) les régénérateurs intermédiaires sont localisés, du côté réception, par comptage des télégrammes de télémétrie et sont contrôlés par évaluation des blocs de signalisation (M1, M2, M3, M4),

caractérisé par le fait

f) que les appareils terminaux de lignes disposent également d'un régénérateur respectif de télégrammes de télémétrie, qui émet périodiquement à des intervalles égaux à la durée d'un cycle,

g) qu'à partir du contenu des deux derniers blocs de signalisation (M3, M4) de chaque télégramme de télémétrie, on peut savoir si ce télégramme a été émis de façon automatique ou bien si son émission a été déclenchée par un ou plusieurs télégrammes de télémétrie,

h) qu'il est prévu, dans chaque appareil terminal de ligne, un récepteur de télégrammes comportant une mémoire, un dispositif d'introduction et un dispositif d'affichage.

2. Système de contrôle suivant la revendication 1, caractérisé par le fait que lors de la réception d'un télégramme de télémétrie comportant une trame erronée, qui est formée par les deux blocs de départ (S1, S2) et l'un des deux ou les deux blocs terminaux (E1, E2), le régénérateur de télégrammes de télémétrie inscrit en surinscription des zéros binaires sur tous les blocs du télégramme, lorsque plus d'un bloc est altéré.

3. Système de contrôle suivant la revendication 1 ou 2, caractérisé par le fait que lors de l'apparition d'une erreur de code dans le signal utile, les m caractères successifs du code du signal utile sont réunis, dans le régénérateur intermédiaire, de manière à former ce qu'on appelle un bloc d'erreurs, dans lequel d'autres erreurs ne sont pas prises en compte, et que l'erreur immédiatement suivante déclenche, à la fin d'un bloc d'erreurs, la formation d'un nouveau bloc d'erreurs.

4. Système de contrôle suivant la revendication 3, caractérisé par le fait que le nombre total des blocs d'erreurs formés pendant la durée du cycle représente le contenu de signalisation des deux premiers blocs de signalisation (M1, M2) du télégramme de télémétrie.

5. Système de contrôle suivant la revendication 3, caractérisé par le fait que le nombre des blocs d'erreurs, qui peuvent apparaître pendant la durée d'un cycle, est classé dans des gammes de valeurs, et que la gamme, dans laquelle un nombre réel de blocs d'erreurs se situe, représente le contenu de signalisation des deux premiers blocs de signalisation (M1, M2) du télégramme de télémétrie.

6. Système de contrôle suivant les revendications 1, 2, 3, 4 ou 5, caractérisé par le fait qu'au récepteur de télémétrie sont envoyés, par l'intermédiaire d'une borne supplémentaire, des télégrammes qui sont produits dans l'appareil terminal de ligne exécutant une détection et dont les blocs de signalisation contiennent des informations concernant le taux d'erreurs du signal utile reçu par l'appareil terminal de ligne, qui réalise la détection.

7. Système de contrôle suivant la revendication 1, 2, 3, 4, 5 ou 6, caractérisé par le fait que les numéros des régénérateurs intermédiaires et des appareils terminaux de lignes peuvent être affichés avec le contenu des télégrammes associés de télémétrie.

8. Système de contrôle suivant la revendication 7, caractérisé par le fait que seuls sont affichés des télégrammes de télémétrie, qui ne sont pas plus anciens qu'à ce qui correspond à la durée du cycle.

9. Système de contrôle suivant la revendication 7 ou 8, caractérisé par le fait que les contenus des télégrammes de télémétrie d'une partie des régénérateurs intermédiaires peuvent être affichés au moyen de l'introduction de leurs numéros dans le récepteur de télégrammes.

10. Système de contrôle suivant la revendication 3, 4 ou 5, caractérisé par le fait que seuls les contenus des télégrammes de télémétrie de la partie des régénérateurs intermédiaires, dans laquelle un nombre formant seuil pouvant être prédéterminé de blocs d'erreurs est dépassé, peuvent être affichés.

11. Système de contrôle suivant la revendication 1, 2, 3, 4, 5 ou 6, caractérisé par le fait qu'un régénérateur intermédiaire individuel ou un appareil terminal de lignes individuel est contrôlé, grâce à l'introduction de son numéro, et que le contenu de son télégramme de télémétrie pour chaque cycle est affiché.

12. Système de contrôle suivant la revendication 3, 4 ou 5, caractérisé par le fait que les télégrammes de contrôle, qui contiennent tous des nombres de blocs d'erreurs arrivant, sont mémorisés dans une mémoire du récepteur de télégrammes et que les télégrammes de contrôle sont évalués comme des télégrammes de télémétrie reçus, dans le récepteur de télégrammes.

13. Système de contrôle suivant l'une des revendications 1 à 12, caractérisé par le fait que les blocs de signalisation (M1, M2, M3, M4), les blocs de départ (S1, S2) et les blocs terminaux (E1, E2) sont constitués par des mots de code contenant chacun quatre bits.

14. Système de contrôle suivant la revendication 13, caractérisé par le fait que le nombre des blocs d'erreurs possible est classé seulement dans un nombre de gammes de valeurs tel que, pour le codage de toutes les gammes ainsi que des blocs de départ et des blocs terminaux d'un télégramme de télémétrie, on peut utiliser différents mots de code.

15. Système de contrôle suivant l'une des revendications 1 à 14, caractérisé par le fait que les deux premiers blocs de signalisation (M1, M2) prévus pour tous les télégrammes de télémétrie, qui sont émis dans la section de transmission, par le régénérateur de télégrammes de télémétrie d'un appareil terminal de ligne, sont toujours constitués, pour réaliser le contrôle, par les mêmes mots de code.

1 | S1 | S2 | M1 | M2 | M3 | M4 | E1 | E2 |

2 | S1 | S2 | M1 | M2 | M3 | M4 | E1 | S1 | S2 | M1 | M2 | M3 | M4 | E1 | E2 |

n | S1 | S2 | M1 | M2 | M3 | M4 | E1 | S1 | S2 | M1 | M2 | M3 | M4 | E1 | S1 | S2 | M1 | M2 | M3 | M4 | E1 | S1 | ... | S1 | S2 | M1 | M2 | M3 | M4 | E1 | E2 |

0 123 132